Europäisches Patentamt

European Patent Office

Office européen des brevets

(19)

(11) Veröffentlichungsnummer: **0 143 433**

**B1**

(12)

# EUROPÄISCHE PATENTSCHRIFT

(45) Veröffentlichungstag der Patentschrift:
08.03.89

(51) Int. Cl.⁴: **G 11 B 5/72**

(21) Anmeldenummer: **84114077.5**

(22) Anmeldetag: **22.11.84**

(54) **Magnetischer Aufzeichnungsträger.**

(30) Priorität: **29.11.83 DE 3343107**

(43) Veröffentlichungstag der Anmeldung:
**05.06.85 Patentblatt 85/23**

(45) Bekanntmachung des Hinweises auf die Patenterteilung:
**08.03.89 Patentblatt 89/10**

(84) Benannte Vertragsstaaten:
**DE FR GB NL**

(56) Entgegenhaltungen:
**US-A-3 109 749**
**US-A-3 353 166**
**US-A-4 277 540**

(73) Patentinhaber: **BASF Aktiengesellschaft, Carl-Bosch- Strasse 38, D-6700 Ludwigshafen (DE)**

(72) Erfinder: **Guettner, Christine, Furtwaenglerstrasse 27, D-6900 Heidelberg (DE)**
Erfinder: **Heilmann, Peter, Dr., Otto- Schmitt-Gross- Strasse 42, D-6702 Bad Duerkheim (DE)**
Erfinder: **Kullmann, Udo, Dr., Mohngasse 23, D-6716 Dirmstein (DE)**
Erfinder: **Mayer, Dieter, Dr., 11 Hill Side Place, Sudbury, Mass. 01776 (US)**
Erfinder: **Grau, Werner, Dr., Tuchbleiche 5, D-6712 Bobenheim- Roxheim (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft magnetische Aufzeichnungsträger, welche auf einem gegebenenfalls mit einer unmagnetischen Unterschicht versehenen dimensionsstabilen Trägermaterial eine dünne ferromagnetische Metallschicht mit einer darauf aufgebrachten Schutzschicht aufweisen.

Die magnetischen Schichten der üblichen Aufzeichnungsträger bestehen aus in polymeren organischen Bindemitteln fein verteilten magnetischen Oxid- oder Metallteilchen. Derartige Schichten lassen sich jedoch aus verfahrenstechnischen wie auch aus elektromagnetischen Gründen nicht beliebig dünn ausführen. In dem Bestreben, die Aufzeichnungsdichte der magnetischen Aufzeichnungsträger insbesondere auf dem Gebiet der Datenverarbeitung zu erhöhen, wobei nur sehr dünne Schichten die Forderung nach hoher Aufzeichnungsdichte erfüllen, wurde inzwischen schon vorgeschlagen, dünne ferromagnetische Metallschichten als Aufzeichnungsschichten einzusetzen. Bekannt sind chemisch oder elektrolytisch abgeschiedene ferromagnetische Metall- bzw. Legierungsschichten, insbesondere aus Kobalt und/oder Nickel oder Phosphor, aber auch auf das Trägermaterial aufgedampfte oder aufgesputterte ferromagnetische Schichten der entsprechenden Metalle oder Legierungen, wie u.a. Eisen, Kobalt, Nickel, Chrom, Seltene Erden.

Die derart charakterisierten Aufzeichnungsträger werden vorwiegend in Plattenform als Speichermedium in sogenannten Plattenlaufwerken eingesetzt, wobei die Platten mit hoher Umdrehungszahl, meist 3600 Upm, rotieren. Die zur Aufzeichnung verwendeten Magnetköpfe fliegen im Abstand von 0,5 bis 1 μm oberhalb der Platte, da sich durch die hohe Relativgeschwindigkeit und die spezielle Kopfform ein Luftpolster zwischen Kopf und Platte ausbildet, von dem der Kopf getragen wird. Die Flughöhe richtet sich nach der Größe der Relativgeschwindigkeit. Vor Inbetriebnahme des Geräts sitzt der Magnetkopf unmittelbar auf der Magnetplatte auf. Ebenso entsteht ein Kopf-Platte Kontakt nach der Abschaltung des Geräts. Die Plattenoberfläche muß deshalb so beschaffen sein, daß sie einer großen Anzahl solcher Kopf-Platte Kontakte ohne Beschädigung standhält. In Anbetracht der Bemühungen, immer höhere Aufzeichnungsdichten zu erreichen, wurde versucht mit immer tiefer fliegenden Köpfen zu arbeiten, so daß auch während des normalen Betriebs Kopf-Platte Kontakte auftreten können. Umso wichtiger ist eine mechanisch stabile Oberfläche, damit Beschädigungen der Magnetschicht des Aufzeichnungsträgers vermieden werden.

Dies bedeutet, daß die Oberfläche der Magnetschicht hervorragende Korrosions- und Abriebfestigkeit aufweist. Da jedoch die für die Aufzeichnungsschichten geeigneten ferromagnetischen Metallschichten keine entsprechenden Eigenschaften aufweisen, ist die Ausbildung von Schutzschichten erforderlich. Diese Schutzschichten müssen aus einem Material bestehen, das sowohl hart ist als auch zur Ausbildung dünner einheitlicher Schichten geeignet ist, die zudem sehr gut auf den zu schützenden Magnetschichten haften. Bei der Auswahl solcher Schutzschicht ist außerdem darauf zu achten, daß weder das Aufbringen der Schutzschicht noch die Schutzschicht selbst in irgendeiner Weise die Magnetschicht nachteilig beeinflußt.

Zur Lösung dieser Probleme wurde bereits eine Vielzahl von Vorschlägen gemacht. So beschreibt die US-PS 3 767 369 das Aufbringen einer Rhodiumschutzschicht zur Verbesserung der Härte und der Gleiteigenschaft, wobei zur Verbesserung der zu geringen Haftung des Rhodiums auf der Magnetschicht eine Zinn-Nickel-Zwischenschicht aufgebracht werden muß. Dieses Verfahren erbringt weder die inzwischen geforderten Schutzschichteigenschaften noch ist deren Aufbringen einfach und problemlos zu bewerkstelligen. Für alle jenen Fälle bei denen die metallische Magnetschicht kobalthaltig ist, wurde vorgeschlagen, diese Magnetschicht bei vorgegebener Feuchtigkeit an Luft zu tempern und damit oberflächlich zu oxidieren (US-PS-3 353 166, US-PS-4 029 541). Ein solches Verfahren weist jedoch besondere Nachteile auf. So kann ein Temperprozeß, der zur Fertigung der genannten Schutzschichten nötig ist, sowohl die magnetischen Eigenschafen der Aufzeichnungsschicht selbst als auch an sich übliche Unter- oder Zwischenschichten derart beeinflussen, daß sie ihrerseits wieder die Eigenschaften der Magnetschichten beeinträchtigen. Bei höheren Einbrenntemperaturen bilden sich beispielsweise in amorphen Nickelunterschichten, wie bei Kobalt-, Kobalt/Phosphor- oder Kobalt/Nickel/Phosphor-Magnetschichten üblich sind, Kristallite, die der an sich unmagnetischen Nickelunterschicht stellenweise magnetische Eigenschaften verleihen, wodurch die darüberliegende Aufzeichnungsschicht beeinflußt wird.

Nach anderen Verfahren werden unterschiedliche Schutzschichten im Vakuum, meist durch Sputtern, aufgebracht, so gemäß der US-PS-4 277 540 Schichten aus Gold, Tantal, Niob, Platin, Chrom, Wolfram und Rhodium sowie die Nitride oder Carbide des Siliciums, Zirkons, Hafniums und Titans und gemäß der US-PS-4 268 369 Schichten aus Siliciumdioxid.

Alle diese Schutzschichten bringen zwar für die jeweils vorgesehene Problemstellung eine Verbesserung, sie können jedoch nicht in allen Eigenschaften, wie vor allem in Abrieb-, Gleit- und Dauerstandsfestigkeit sowie hinsichtlich Korrosion befriedrigen und gleichzeitig dabei die Aufzeichnungseigenschaften der Magnetschicht nicht nachteilig beeinflussen.

Es bestand nun die Aufgabe, magnetische Aufzeichnungsträger, welche eine dünne ferromagnetische Metallschicht als Magnetschicht aufweisen mit einer Schutzschicht zu versehen, welche nicht mit den obengenannten Nachteilen behaftet ist, d. h. welche ohne Beeinflussung der Aufzeichnungseigenschaften der Magnetschicht sich durch besondere Verschleiß- und Korrosisonsfestigkeit auszeichnet.

Es wurde nun gefunden, daß magnetische Aufzeichnungsträger, welche auf einem gegebenenfalls mit einer unmagnetischen Unterschicht versehenen dimensionsstabilen Trägermaterial eine dünne ferromagnetische Metallschicht mit einer darauf aufgebrachten Schutzschicht aufweisen, der gestellten Aufgabe genügen, wenn die Schutzschicht als eine Doppelschicht ausgebildet ist, die aus einer ersten Schicht aus Chrom und einer zweiten Schicht aus Siliciummonoxid besteht.

Insbesondere bestehen die erfindungsgemäßen ferromagnetischen Aufzeichnungsträger aus einem gegebenenfalls mit einer unmagnetischen Unterschicht versehenen dimensionsstabilen Trägermaterial, einer darauf aufgebrachten ferromagnetischen Metallschicht mit einer Dicke von 30 bis 150 nm und der aus einer ersten Schicht aus Chrom und einer zweiten Schicht aus Siliciummonoxid bestehenden Schutzschicht in einer Dicke von 20 bis 500 nm. Dabei ist es besonders vorteilhaft, wenn die erste Schicht aus Chrom eine Schichtdicke von 10 bis 100, vorzugsweise von 10 bis 25 nm und die zweite Schicht aus Siliciummonoxid eine Schichtdicke von 10 bis 490, vorzugsweise von 20 bis 50 nm aufweist.

Die erfindungsgemäßen magnetischen Aufzeichnungsträger zeichnen sich durch die als Doppelschicht aus Siliciummonoxid und Chrom ausgebildete Schutzschicht aus. Ihr Aufbau aus Trägermaterial, gegebenenfalls unmagnetischer Unterschicht und ferromagnetischer Metallschicht ist an sich bekannt.

Als dimensionsstabile Träger für die magnetischen Aufzeichnungsträger kommen alle üblichen Träger für magnetische Metalldünnschichten in Frage, die bei Temperaturen bis mindestens 300° C weitgehend dimensionsstabil sind. Bevorzugt sind Platten bzw. Scheiben aus Aluminium oder Aluminiumlegierungen in den üblichen Stärken. Auch Trägermaterialien aus anderen Metallen und Kunststoffen wie z. B. Kupfer-, Polyimid- oder Polyethylenterephthalat-Folien können Verwendung finden.

Zur Ausbildung geeigneter Magnetschichten werden die Trägermaterialien meist mit einer unmagnetischen Unterschicht versehen. Bekannt und besonders für die vorgesehenen Anwendungen geeignet sind chemisch bzw. autokatalytisch abgeschiedene amorphe Nickel-Phosphor-Legierungsschichten mit einem Phosphoranteil von 7 bis 11 Gew.-%. Die Schichtstärken betragen üblicherweise 5 bis 50, insbesondere 10 bis 30 μm.

Die so aufgebrachten unmagnetischen Unterschichten bewirken zunächst einen hervorragenden Schutz für die Aluminium-Ronden gegenüber Korrosion. Insbesondere bewirken sie jedoch eine wesentliche Verbesserung in der Bearbeitbarkeit der Oberfläche verglichen mit dem unbeschichteten Aluminium-Substrat. Wegen der deutlich größeren Härte der chemisch abgeschiedenen NiP-Schicht, lassen sich durch entsprechende Polier- bzw. Läppverfahren wesentlich glättere und somit geeignetere Oberflächen erzielen, als dies bei unbeschichteten Substraten möglich wäre.

Als ferromagnetische Metalldünnschichten kommen die üblichen mit Schichtstärken von etwa 30 bis 150 nm in Frage, die in an sich bekannter Weise durch chemische Abscheidung, galvanische Abscheidung oder durch Aufdampfen bzw. Aufsputtern, d. h. Abscheidung der Metalle oder Metallegierungen aus der Gasphase im Hochvakuum auf die gegebenenfalls vorbehandelten Träger abgeschieden werden.

Geeignete kobalthaltige ferromagnetische Metalldünnschichten sind vor allem Kobalt-Phosphor-, Kobalt-Bor- sowie Kobalt-Nickel-, Kobalt-Nickel-Eisen-, Kobalt-Eisen- sowie Phosphor-, Bor- und/oder Stickstoff-enthaltende Legierungen der genannten Art, z. B. Legierungen aus etwa 95 bis 98 % Kobalt und 2 bis 10 % Phosphor, etwa 30 bis 20 % Nickel und 70 bis 80 % Kobalt, etwa 90 % Kobalt, 9 % Nickel und 1 % Phosphor, etwa 88 % Kobalt, 9 Nickel und 3 % Bor oder etwa 40 bis 50 % Kobalt, 40 bis 50 % Nickel und 1 bis 5 % Bor. Mit den Legierungen lassen sich z. B. durch chemische Abscheidung auf bevorzugt polierte Substrate Filme von unter 0,6 μm Dicke herstellen mit z. B. einer Koerzitivkraft von 20 bis 75 kA/m und einer Magnetisierung von 1 bis 1,5 Tesla.

Eine besonders bevorzugte ferromagnetische Metallschicht besteht aus 90 bis 98,5 % Kobalt und 1,5 bis 10 % Phosphor und wurde in einer Dicke von 0,08 bis 0,5 μm durch galvanische oder stromlose Abscheidung auf einem Träger aus vernickelter Aluminiumlegierung aufgebracht.

In gleicher Weise lassen sich auch magnetische Aufzeichnungsträger, welche Speicherschichten aus einer SmCo-Legierung aufweisen, mit der Schutzschicht versehen und damit gemäß der Erfindung vorteilhaft ausgestalten. Derartige SmCo-Speicherschichten sind bekannt, ebenso wie ihre Herstellung (US-PS-4 287 225). Dies gilt auch für die gemäß der EP-Anmeldung 8328 durch Sputtern hergestellten amorphen Eisennitrid-Filme. Als Speicherschichten, welche sich aufgabengemäß mit der Schutzschicht versehen lassen, eignen sich ebenso die in der DE-AS-1 521 315 beschriebenen Schichten, welche aus Eisen, Kobalt, Nickel oder deren Legierungen bestehen und durch Schrägbedampfung in einer Vakuumapparatur hergestellt werden. Auch die als Speicherschichten von Datenträgerplatten beschriebenen Eisen-Kobalt-Legierungsschichten (DE-OS-2 347 540) werden durch die erfindungsgemäßen Chrom-Siliciummonoxid-Schutzschichten verbessert.

Auf die bekannten und als Aufzeichnungsschichten geeignete ferromagnetische Metallschichten wird die als Doppelschicht ausgebildete Schutzschicht aufgebracht. Das Aufbringen der Schutzschicht erfolgt jeweils durch Verdampfen der entsprechenden Materialien, nämlich Cr bzw. SiO, in einer Vakuumapparatur. Von besonderem Vorteil ist dieses Verfahren also für diejenigen Magnetschichten, deren Herstellung bereits in einer Vakuumapparatur erfolgt. Die Anwendung ist jedoch ohne Schwierigkeiten auch auf anders hergestellten Speicherschichten möglich. Der Druck in der Vakuumapparatur in der die Schutzschichten aufgebracht werden, sollte im Bereich von $10^{-4}$ bis $10^{-5}$ Torr liegen, damit sichergestellt ist, daß die Anzahl der in die Schicht eingelagerten Fremdatome gering ist. Nach dem Evakuieren werden nacheinander die beiden Schutzschichtkomponenten aufgebracht. Dazu wird zunächst Chrom aufgedampft, bevorzugt unter Elektronenstrahlverdampfung von Chrom aus einem wassergekühlten Kupfertiegel. Die zweite Schicht aus Siliciummonoxid wird anschließend wahlweise mit den Elektronenstrahl oder aus einem sogenannten Widerstandsheizer verdampft. Günstig für das Verfahren ist es, das mit der Speicherschicht versehene Substrat während der Bedampfung zu bewegen, um eine möglichst gleichmäßige Schichtdickenverteilung über den gesamten Bereich zu erhalten. Die Gesamtschichtdicke läßt sich über ein Schwingquarzsystem steuern bzw. regeln.

Die auf diese Weise erhaltenen erfindungsgemäßen magnetischen Aufzeichnungsträger zeigen eine hervorragende mechanische Festigkeit der Oberfläche die sich durch eine besondere Widerstandsfestigkeit bei der vielfachen Benutzung des Aufzeichnungsträgers, wie es besonders beim Start-Stop-Betrieb von Magnetspeicherplatten der Fall ist, bewährt. Ebenfalls sind die erfindungsgemäßen magnetischen Aufzeichnungsträger durch die Schutzschicht sehr stabil gegen die durch Luft bzw. Luftfeuchtigkeit verursachte Korrosion der dünnen magnetischen Metallschichten. Wesentlich ist jedoch nicht nur die Kombination beider Verbesserungen sondern vor allem die Tatsache der Verbesserung, ohne daß die magnetischen Eigenschaften der Aufzeichnungsschicht dadurch, wie meist beim Stand der Technik üblich, nachteilig beeinflußt werden. Neben diesen vorteilhaften Wirkungen der Schutzschicht wurde überraschenderweise festgestellt, daß durch die Ausbildung der Schutzschicht als Doppelschicht magnetostriktive Pegelverluste vermindert werden, da die Scherwirkung, welche über die Kopfkontakte auf die Magnetschicht übertragen wird, deutlich herabgesetzt wird.

Die Erfindung sei anhand nachstehender Beispiele näher erläutert.

**Beispiel 1**

Auf polierte vernickelte Aluminiumscheiben, die durch chemische Abscheidung mit einer 0,06 μm starken phosphorhaltigen Co-Schicht versehen worden waren (Phosphoranteil in der Schicht 3 Gew.-%) wurde die Schutzschicht in folgender Weise aufgebracht. Die Platte wurde in die Vakuumapparatur gebracht, die dann bis auf einen Restgasdruck von $2 \times 10^{-6}$ Torr evakuiert wurde. Der Abstand zwischen den Aufdampfquellen und der Platte beträgt 50 cm, so daß die Temperaturbelastung der Platte durch Wärmebestrahlung sehr gering gehalten werden konnte. Nun wurden nacheinander die beiden Schutzschichtlagen aufgedampft, d. h. zuerst eine 20 nm dicke Chromschicht gefolgt von einer 50 nm dicken SiO-Schicht. Für die Chromverdampfung wurde eine Leistung von 3 kW benötigt, um mit einer Rate von 1 nm/s abzuscheiden, für SiO wurden bei einer Leistung von 1 kW 0,5 nm/s erreicht.

Die so hergestellte Deckschicht machte die Magnetplatte widerstandsfähig gegen mehr als 20.000 Kopf-Start- und -Landezyklen auf einer Spur beim Betrieb in einem handelsüblichen Plattenspeichergerät. Dies galt auch dann, wenn die Platte zuvor eine 14tägige Lagerung im Klimaschrank bei 65°C und 80 % relativer Feuchte durchlaufen hatte, was ohne Deckschicht in korrosiven Erscheinungen und damit zur Fluguntauglichkeit der Platte führte.

**Vergleichsbeispiel 1**

Eine gemäß Beispiel 1 hergestellte Speicherplatte, die nur mit der 0,6 μm starken CoP-Magnetschicht versehen war, wurde ohne Aufbringen der Schutzschicht dem Start-Stop-Test unterzogen. Nach einer Laufzeit von 2400 Start-Stop-Kontakten war die Magnetschicht an den Kontaktstellen zerstört.

**Beispiel 2**

Auf eine gemäß Beispiel 3 der US-PS-4 287 225 hergestellte Speicherplatte mit einer CoSm-Speicherschicht wurden, wie in Beispiel 1 beschrieben, zuerst eine Chrom- und dann eine SiO-Schicht aufgebracht. Mit dieser Platte konnten auf einem handelsüblichen Magnetplattenspeichergerät 20.000 Start-Stop-Kontakte mit dem Magnetkopf auf einer Spur erzielt werden.

**Vergleichsbeispeil 2**

Eine gemäß Beispiel 3 der US-PS-4 287 225 hergestellte Speicherplatte wurde ohne Aufbringen der Schutzschicht dem Start-Stop-Test unterzogen. Nach einer Laufzeit von 3000 Start-Stop-Kontakten war die Magnetschicht zerstört.

**Patentansprüche**

1. Magnetische Aufzeichnungsträger, welche auf einem gegebenenfalls mit einer unmagnetischen Unterschicht versehenen dimensionsstabilen Trägermaterial eine dünne ferromagnetische Metallschicht mit einer darauf aufgebrachten Schutzschicht aufweisen, dadurch gekennzeichnet, daß die Schutzschicht als eine Doppelschicht ausgebildet ist, die aus einer ersten Schicht aus Chrom und einer zweiten Schicht aus Siliciummonoxid besteht.

2. Magnetische Aufzeichnungsträger gemäß Anspruch 1, dadurch gekennzeichnet, daß auf der ferromagnetischen Metallschicht mit einer Dicke von 30 bis 150 nm die als Doppelschicht ausgebildete Schutzschicht eine Dicke von 20 bis 500 nm aufweist.

3. Magnetische Aufzeichnungsträger gemäß Anspruch 2, dadurch gekennzeichnet, daß auf einer ferromagnetischen Metallschicht mit einer Dicke von 30 bis 150 nm eine erste Schicht aus Chrom in einer Schichtdicke von 10 bis 100 nm und eine zweite Schicht aus Siliciummonoxid in einer Schichtdicke von 10 bis 490 nm aufgebracht ist.

**Claims**

1. A magnetic recording medium which possesses, on a dimensionally stable base which may or may not have been provided with a nonmagnetic lower layer, a thin ferromagnetic metal layer on top of which a protective layer has been applied, wherein the protective layer is in the form of a double layer consisting of a first layer of chromium and a second layer of silicon monoxide.

2. A magnetic recording medium as claimed in claim 1, wherein, on the 30 - 150 nm thick ferromagnetic metal layer, the protective layer in the form of a double layer is from 20 to 500 nm thick.

3. A magnetic recording medium as claimed in claim 2, wherein a first, 10 - 100 nm thick layer of chromium and a second, 10 - 490 nm thick layer of silicon monoxide have been applied on top of a 30 - 150 nm thick ferromagnetic metal layer.

**Revendications**

1. Support d'enregistrement magnétique, qui présente, sur un matériau support, stable en dimensions, éventuellement muni d'une sous-couche non magnétique, une couche métallique mince, ferromagnétique avec une couche de protection appliquée sur celle-ci, caractérisé par le fait que la couche de protection est sous forme de couche double qui est constituée d'une première couche de chrome et d'une seconde couche de monoxyde de silicium.

2. Support d'enregistrement magnétique, selon la revendication 1, caractérisé par le fait que, sur la couche métallique ferromagnétique, d'une épaisseur de 30 à 150 nm, la couche de protection en forme de couche double possède une épaisseur de 20 à 500 nm.

3. Support d'enregistrement magnétique, caractérisé par le fait que, sur une couche métallique ferromagnétique, d'une épaisseur de 30 à 150 nm est appliquée une première couche de chrome en une épaisseur de couche de 10 à 100 nm et une seconde couche de monoxyde de silicium d'une épaisseur de couche de 10 à 490 nm.